# EUROPEAN PATENT SPECIFICATION

(11) **EP 2 836 060 B1**
(45) Date of publication and mention of the grant of the patent: **04.10.2017**
(21) Application number: 13713925.9
(22) Date of filing: 04.04.2013
(51) Int. Cl.: A01D 89/00, A01D 75/18

(54) **SAFETY DEVICE AND SAFETY METHOD FOR FARM MACHINES, AND CORRESPONDING FARM MACHINE**
SICHERHEITSVORRICHTUNG UND SICHERHEITSVERFAHREN FÜR LANDWIRTSCHAFTLICHE MASCHINEN UND ENTSPRECHENDE LANDWIRTSCHAFTLICHE MASCHINE
DISPOSITIF ET PROCÉDÉ DE SÉCURITÉ POUR MACHINES AGRICOLES, ET MACHINE AGRICOLE CORRESPONDANTE

(30) Priority: 12.04.2012 IT BO20120193
(43) Date of publication of application: 18.02.2015
(73) Proprietor: Kverneland Group Ravenna S.r.l., 48026 Russi (RA) (IT)
(72) Inventor: RAVAGLIA, Paolo, 48012 Bagnacavallo (IT)
(74) Representative: Modiano, Micaela Nadia
(86) International application number: PCT/EP2013/057132
(87) International publication number: WO 2013/152991

(56) References cited:
- EP-A1- 0 876 752
- EP-A1- 2 225 926
- EP-A2- 1 066 745
- EP-A2- 1 293 697
- EP-A2- 2 151 156

## Description

The present invention relates to a safety device and a safety method for farm machines and to the corresponding farm machine.

In the agricultural sector, farm machines, termed straw balers or round balers, are known which are designed to pick up and bale (and optionally cut up) materials such as straw, hay, forage and the like.

For these purposes, round balers are equipped, frontally along the advancement direction, with an apparatus for picking up the materials cited above, which is typically constituted by a working shaft, which rotates about an axis that is parallel to the ground and is provided with a plurality of teeth capable of picking up and lifting the hay, straw, forage, etcetera.

After being collected (and optionally pressed and cut up by means of a further rotor, or other similar device), the material is rearranged on a central supply channel by the action of screw feeders. From this channel, the material is finally transferred toward a chamber in which the bale is formed, typically (but not exclusively) with a circular shape.

This constructive solution, however, is not without drawbacks.

During operation an occasional excessive build-up of material at a transverse portion of the working shaft may cause the jamming and sudden locking of said shaft even though the power unit (arranged upstream of the power take-off unit with which these farm machines are typically provided) is still active.

Faced with this eventuality, often the operator who controls and
drives the round baler stops the advancement of the machine and takes care personally of the removal of the jam.

In order to do this, he gets close to the working shaft and, with his hands or feet, moves the material in order to free the affected portion of the working shaft from the material accumulated therein.

If he, carelessly and in order to shorten working time, performs this activity without having first stopped the drive unit, it is clear that this procedure proves to be highly dangerous. In fact, the removal of the constraint to the rotation of the working shaft restores immediately the transmission of power and therefore causes the restarting of the previously locked elements, with consequent danger of injury or death of the operator.

The Applicant filed on 15 December 2011 Italian patent application BO2011A000716, which describes a safety device capable of partly solving the drawback cited above.

This device provides in fact for the use of a movable retention element and of a complementary retention element, which is keyed on the output shaft of the power take-off (associated with the working shaft).

The retention element can be arranged on command so as to interfere with the path of the complementary retention element, in order to cause, in case of restarting of the rotation of the output shaft (and therefore of the complementary retention element) as a consequence of the removal of the jam, the almost immediate forced stopping of the output shaft itself and of the working shaft with it.

Moreover, the application also describes the presence of a unit for damping the forced locking caused by the abutment of the complementary retention element against the retention element, which can be actuated automatically upon mutual impact, in order to cushion its effects, thus solving other known drawbacks of safety devices of the known type, which expose the involved elements to violent and unwanted stresses.

Moreover, according to the constructive solution described in the cited application of the Applicant, the movement of the pivot, in order to place it in the above-cited interference arrangement, was entrusted to a bar, arranged frontally to the working shaft, so that the operator could easily press it before approaching said shaft, so as to proceed with the attempt to remove the jam only after actuating the safety device.

Even this constructive solution, however, is not free from drawbacks.

In this solution, in fact, the operator must take care manually to operate on the retention element, by means of the bar, in order to then proceed with the removal of the jam.

Vice versa, the safety rules with which farm machines such as the one described above must comply require the safety devices to be capable of intervening in advance, in practice "forcing" the operator, who wishes to remove the constraint manually, to work in absolute safety, without the possibility of bypassing the provided safety measures.

On the other hand, a constructive solution that entails the simple stopping of the tractor following the detection of a jam would not be welcomed, because it would force the operator to stop frequently, who would be forced to climb down from his seat to remove the jam manually, with consequent inconveniences, physical efforts and delays, although it is often sufficient for the operator to wait a few seconds, without climbing down from his seat, for the impulses of the drive unit to clear autonomously the rotating shaft from the mass of accumulated material.

EP1066745 discloses a device and method for controlling conveyance and working organs of bail pressers which involves measuring the difference in rotation numbers in the drive train of the tools during loading of harvested goods within a given time period. The depth of the transport channel is altered to maintain preset values for the loading of the gear train. Switchable safety units provided in the drive train and working cylinders are individually controlled by machine control according to the loading states. For peak loads, which produce a response in the safety units, the switching moment of the safety units is briefly increased inside a fixed time slot pattern. If the loading peak continues, the working space at the tools or the throughput is varied, and afterwards automatically returns to normal. Within a set rhythm of time the rotation speed differences in the drive of the conveyor and working organs which indicate a jam of the harvested product are recorded, and the set value for the load of the drive system is changed if needed by changing the depth of the conveyor channel and after reducing the increased load in the drive systems automatically returns the changed values in the settings to the normal harvest setting. The switchable safety devices and working cylinders for the drives of the working and conveying systems are controlled through the machine controls depending on the specific loads and with peak loads which set off the saftey devices within a set schedule to increase the switching moment of the safety device briefly, then if the peak load continues the gap between the working organs and/or the flow capacity of the conveyors is changed, and after elimination of the causes for the peak loads of the working gap and the flow of the harvesting product by the machine controls automatically returns to the set working parameters.

The aim of the present invention is to solve the problems cited above, providing a safety device that allows an operator to remove in absolute safety an accidental jamming of the working shaft.

Within this aim, an object of the invention is to propose a safety method that allows an operator to remove in absolute safety an accidental jamming of the working shaft.

Another object of the invention is to propose a farm machine that allows an operator to remove in absolute safety an accidental jamming of the working shaft.

A further object of the invention is to provide a device that offers the operator the possibility of waiting for the automatic removal of the jam.

A further object of the invention is to propose a method that ensures high reliability in operation, in practice preventing the operator from being able to bypass the method.

Another object of the invention is to provide a device that can be obtained easily starting from commonly commercially available elements and materials.

Yet another object of the invention is to propose a method that can be performed easily and at low cost.

This aim and these and other objects are achieved by a safety device for farm machines provided with an apparatus for treating materials of the type of agricultural products, equipped with at least one rotating working shaft which faces the ground and is proximate thereto and is provided with means for treating the materials, said device comprising at least one movable element for actuating the interruption of the transmission of power from a drive unit of the working shaft to the working shaft itself, said actuation element being movable from a passive configuration, for free power transmission, to an active configuration, for interruption of power transmission, and vice versa, characterized in that it comprises an automatic apparatus for the timed actuation of the transition of said actuation element from said passive configuration to said active configuration, said automatic apparatus comprising at least first means for detecting the rotation rate of said working shaft and second means for detecting the rotation rate of a driving shaft, comprised in said drive unit, said detection means being controlled by an electronic unit for the control and actuation of a mechanism for the movement of said actuation element, said electronic unit being provided with a module for comparing the rotation rates for the timed sending, after a preset delay time monitored by a respective timer, of the command for transition of said movable element from said passive configuration to said active configuration, following the detection of a variation between the rates that exceeds a preset reference parameter, which represents a jamming of the working shaft, said delay time being shorter than the time estimated for manual intervention by an operator to remove the jam.

This aim and these and other objects are achieved also by a farm machine, comprising an apparatus for treating materials of the type of agricultural products, equipped with at least one rotating working shaft which faces the ground and is proximate thereto, is provided with means for treating the materials and has a safety device that comprises at least one movable element for actuating the interruption of the transmission of power from a drive unit of said working shaft to the working shaft itself, said actuation element being movable from a passive configuration, for free power transmission, to an active configuration, for interruption of power transmission, and vice versa, characterized in that said safety device comprises an automatic apparatus for the timed actuation of the transition of said actuation element from said passive configuration to said active configuration, said automatic apparatus comprising at least first means for detecting the rotation rate of said working shaft and second means for detecting the rotation rate of a driving shaft, comprised in said drive unit, said detection means being controlled by an electronic unit for the control and actuation of a mechanism for the movement of said actuation element, said electronic unit being provided with a module for comparing the rotation rates for the timed sending, after a preset delay time monitored by a respective timer, of the command for transition of said movable element from said passive configuration to said active configuration, following the detection of a variation between the rates that exceeds a preset reference parameter, which represents a jamming of said working shaft, said delay time being shorter than the time estimated for manual intervention by an operator to remove the jam.

This aim and these objects are also achieved by a safety method for farm machines provided with an apparatus for treating materials of the type of agricultural products, equipped with at least one rotating working shaft, which faces the ground and is proximate thereto and is provided with means for treating materials, which consists in detecting, in a step a., the rotation rate of the working shaft; in monitoring, in a step b., the rotation rate of a driving shaft, comprised in a drive unit, through a respective kinematic transmission chain, of the working shaft, substantially simultaneously with said detection step a; in performing, in a step c., a comparison between the rotation rates by means of an electronic control and actuation unit provided with a respective comparison module; in sending, in a step d., after a preset delay time from the detection of a variation between the rates that exceeds a preset reference parameter, which is representative of a jamming of the working shaft, the command for activation of a mechanism for moving at least one movable element for actuating the interruption of the transmission of power from a drive unit of the working shaft to the actuation shaft itself, the actuation element being movable from a passive configuration, for free power transmission, to an active configuration, for interrupting the transmission of power, and vice versa, said delay time being preferably shorter than the time estimated for manual intervention by an operator to remove the jam.

Further characteristics and advantages of the invention will become more apparent from the description of a preferred but not exclusive embodiment of the safety device and of the farm machine according to the invention, illustrated by way of non-limiting example in the accompanying drawings, wherein:

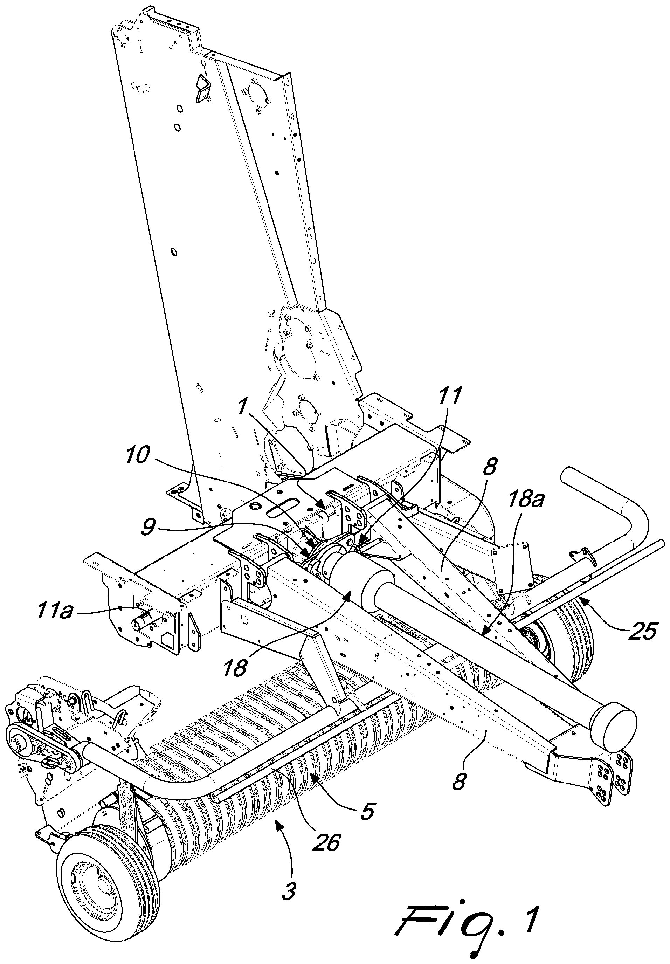

Figure 1 is a perspective view of the safety device according to the invention and of some components of the farm machine on which is installed;

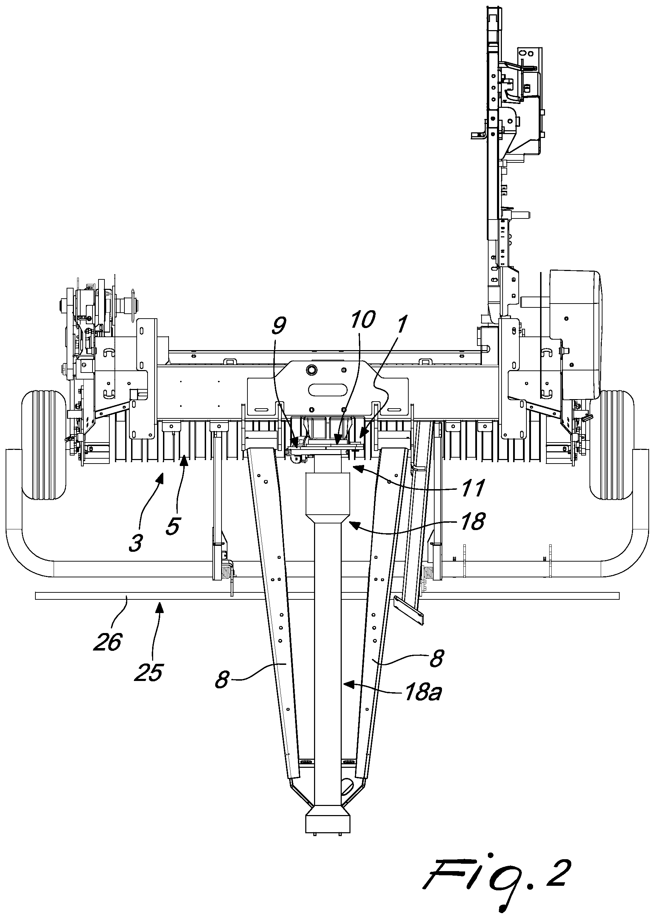

Figure 2 is a top view of the safety device of Figure 1;

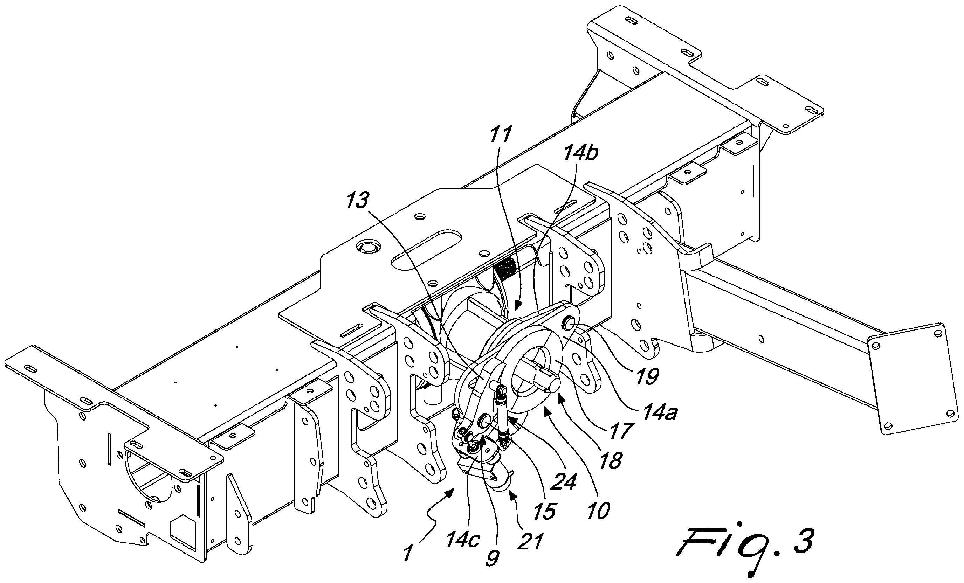

Figure 3 is a perspective view of a detail of Figure 1,

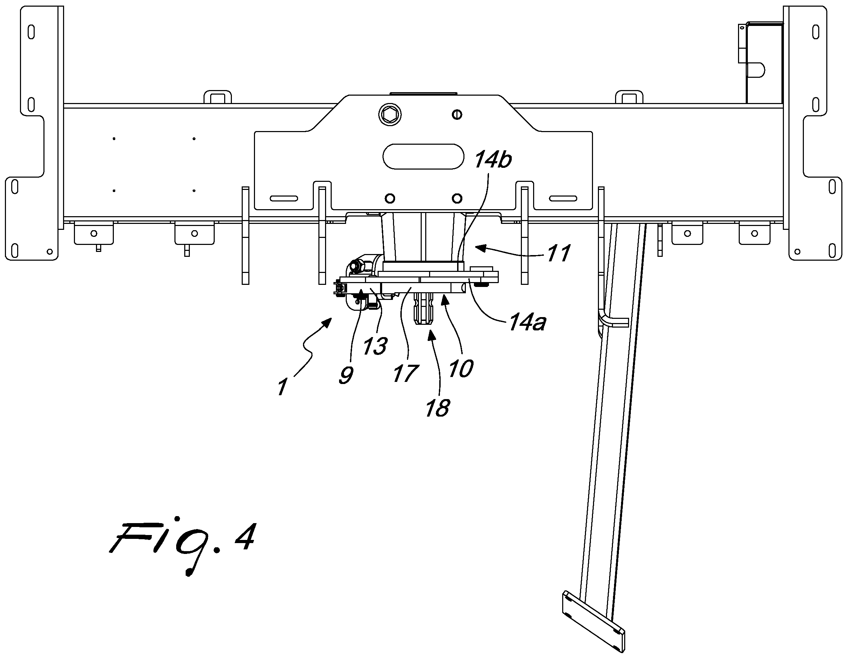

Figure 4 is a top view of the detail of Figure 3;

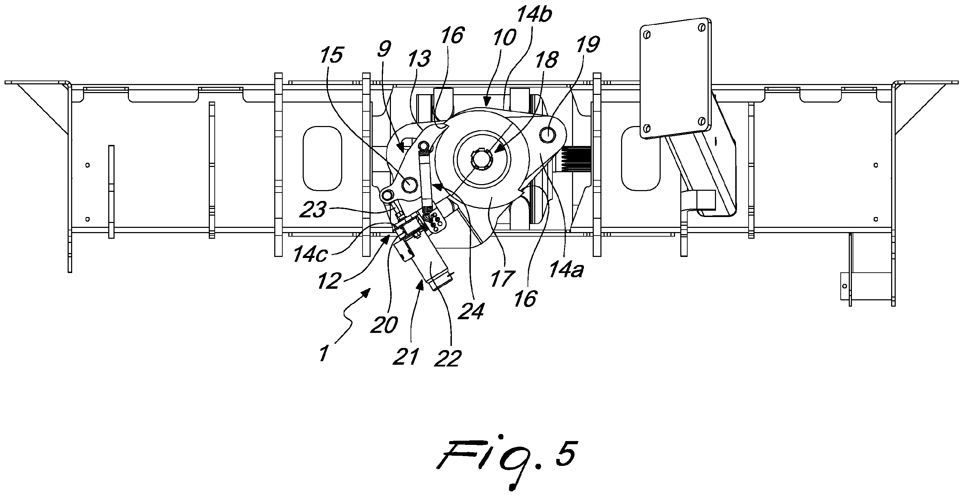

Figure 5 is a front elevation view of the detail of Figure 3;

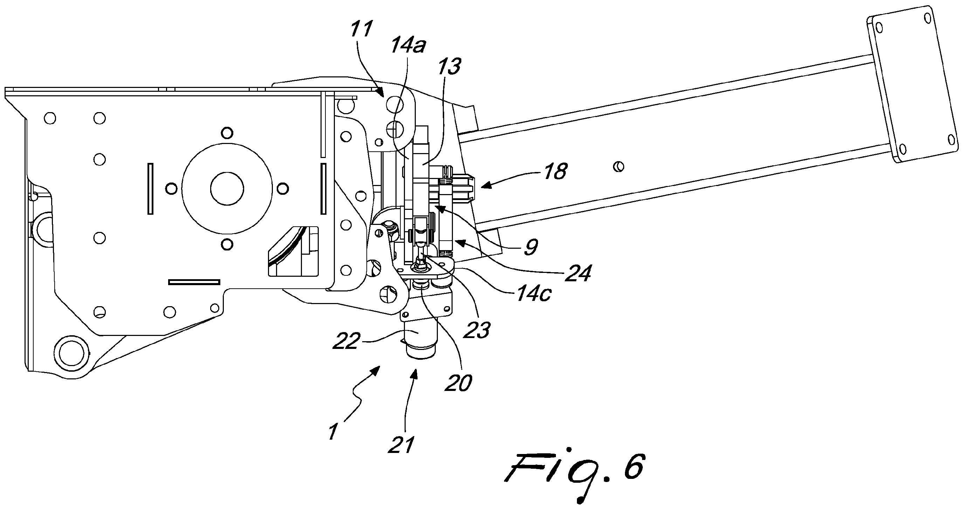

Figure 6 is a lateral elevation view of the detail of Figure 3;

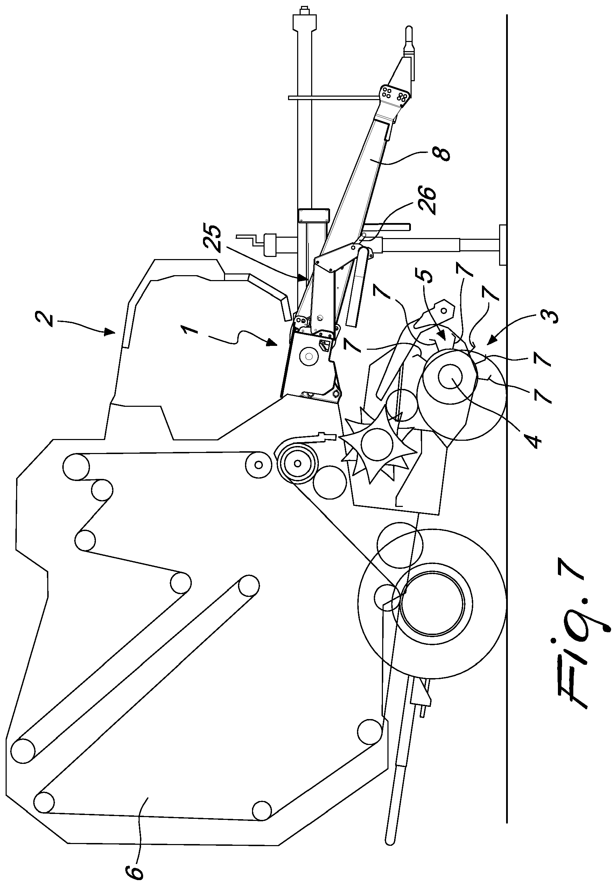

Figure 7 is a schematic lateral elevation view of the farm machine according to the invention;
Figure 8 is a schematic view of a possible method of operation of the electronic unit.

With reference to the cited figures, the safety device according to the invention, generally designated by the reference numeral 1, is designed (preferably, but not exclusively) to be installed on farm machines 2, of the type that comprises an apparatus 3 for treating materials of the type of agricultural products, equipped with at least one rotating working shaft 4 which in turn faces the ground and is proximate thereto and is provided with means 5 for treating said materials.

It is useful to note right now that according to the preferred but not exclusive application of the present invention, the farm machine 2 is of the type of straw balers, round balers and the like, which are designed to pick up materials such as hay, straw and forage, by means of said apparatus 3, and to then transfer them and press them, by means of a conveyance unit typically provided with mutually opposite screw feeders that surmount the apparatus 3, and with other pressing and shredding rotors, to a chamber 6 for forming the bale, which is arranged at the rear of the apparatus 3.

According to this preferred application, therefore, the working shaft 4 is arranged parallel to the ground (and at right angles to the advancement direction of the machine 2) and is provided with treatment means 5 constituted by a plurality of teeth 7, capable of picking up and lifting the hay and straw that the machine 2 encounters progressively during its advancement.

With further reference to the preferred application, the farm machine 2 is designed to be towed by a tractor or other motorized vehicle, to which the machine 2 can be anchored stably by brackets 8 or other engagement elements.

It is noted that the installation of the device 1 according to the invention (which in any case falls within the protective scope claimed herein) in other types of farm machines 2 (even provided with independent motor drive) or in different fields of application, depending on the specific requirements, is not excluded.

The device 1 comprises at least one movable element for actuating the interruption of the transmission of power from a drive unit of the working shaft 4 to the working shaft 4 itself; more precisely, said actuation element is movable from a passive configuration, for free power transmission, to an active configuration, for interruption of power transmission, and vice versa.

It is therefore possible (and within the protective scope claimed herein) to use the safety device 1 on farm machines 2 provided with any type of actuation element (for example, a clutch, a brake, or other type of disengagement element), in any case capable of operating in order to decouple the drive unit from the working shaft 4, even according to known methods.

In the paragraphs that follow, a brief description will be given of a possible embodiment of the actuation element and of the other components associated therewith, as illustrated in the accompanying figures and substantially in analogy to what is described in the already cited Italian patent application BO2011A000716 filed by the same Applicant, to which reference should be made for further details.

More precisely, according to this constructive solution, the safety device 1 comprises therefore an actuation element constituted by a retention element 9, which can move on command from a passive configuration to an active configuration, and vice versa, and operates on a complementary retention element 10, which can be functionally associated with a kinematic transmission chain 11, which is interposed between the already cited drive unit of the working shaft 4 and the working shaft 4 itself, in order to place the working shaft 4 under the control of the complementary retention element 10.

Reference will be made repeatedly in the continuation of present description to the constructive solution that entails an actuation element constituted by the retention element 9, but, as already observed, devices 1 that entail the use of different types of actuation elements fall within the protective scope claimed herein.

In the passive configuration, the retention element 9 is spaced from the complementary retention element 10, so as to allow the free rotation of the complementary retention element 10 and of the working shaft 4 and therefore the free transmission of power.

Vice versa, in the active configuration (shown in the accompanying figures), the retention element 9 is arranged so as to interfere with respect to the path of the complementary retention element 10, so as to cause, in ways that will be described in more detail hereinafter, the forced locking of the complementary retention element 10 itself and consequently of the working shaft 4 (with consequent interruption of the transmission of power).

Moreover, at least one of the retention element 9 and the complementary retention element 10 is associated with a unit 12 for damping the above-mentioned forced locking of the complementary retention element 10 and of the working shaft 4 (but more generally of all the functional units arranged downstream of the complementary retention element 10), which can be actuated automatically upon the impact of the retention element 9 with the complementary retention element 10, in order to cushion this impact and avoid the danger of subjecting the elements involved to violent stresses.

It should be noted furthermore that the possibility is not excluded of providing safety devices 1 according to the invention that have different types of retention elements 9, complementary retention elements 10 and damping units 12, as a function of the specific requirements, without thereby abandoning the protective scope claimed herein.

With reference to the constructive solution proposed in the accompanying figures, therefore, the retention element 9 is substantially constituted by an arm 13, which can be articulated to a supporting plate 14a about a first pivot 15 and can therefore oscillate from the passive configuration, in which the arm 13 is spaced from the complementary retention element 10, to the active configuration, and vice versa.

In the active configuration, a first end portion of the arm 13, which is substantially opposite the first pivot 15, is arranged along the stroke of at least one shoulder 16, which protrudes externally from a rotating disk 17, which substantially constitutes the complementary retention element 10 and can be keyed on the output shaft of the power take-off 18 of the farm machine 2: the output shaft is comprised in the above-cited kinematic transmission chain 11 and therefore is also designed to transmit the motion to the working shaft 4, for example by means of a subsequent main transmission shaft 11a, arranged downstream of the output shaft and associated therewith by means of suitable gears.

In fact, as is known, the power take-off 18 is the element by means of which the drive unit of the tractor or of another motorized vehicle (to which, according to the solution proposed and described herein by way of non-limiting example, the machine 2 can be anchored thanks to the brackets 8) can actuate the various functional units that operate on the farm machine 2 coupled thereto, by means of a mechanical rotary movement and thanks to a Cardan transmission shaft 18a.

In the active configuration, therefore, the retention element 9 is capable of stopping forcibly the rotation of the complementary retention element 10 (of the disk 17) and therefore the rotation of the output shaft of the power take-off 18, thus stopping the transmission of power to all the functional units of the machine 2, including, as mentioned earlier, the working shaft 4.

More particularly, in the solution proposed in the accompanying figures, the disc 17 has a pair of shoulders 16, formed by opposite parts of its circumferential rim: in this manner, a rotation of the disk 17, when the arm 13 is arranged in the active configuration, brings one of the shoulders 16 into abutment with the first end portion cited above, with the consequent forced locking of the disk 17 and, consequently, of the working shaft 4.

In practice, therefore, when the arm 13 is arranged in the active configuration, the disk 17 is allowed only a rotation equal to the angular distance between two consecutive shoulders 16 provided on its rim.

Usefully, the supporting plate 14a cited above is articulated to a fixed body of the farm machine 2 about a second pivot 19: upon the abutment (impact) of one of the shoulders 16 at the first end portion, the plate 14a and the arm 13 (before their forced stopping) are thus entrained in oscillation by the disk 17 (about the second pivot 19) up to a stroke limit, on which the forced locking of the disk 17 occurs.

The damping unit 12 comprises therefore at least one elastic element, associated with the arm 13, the elastic reaction of which contrasts said stroke in order to soften the forced locking of the working shaft 4 and of the other functional units associated with the kinematic chain 11 and/or arranged downstream of the power take-off 18.

According to a possible constructive solution, as shown in the accompanying figures, the plate 14a is articulated to a reference complementary plate 14b, which can be fixed to the chassis of the machine 2 and with respect to which the plate 14a itself can thus rotate (by oscillating).

For example, said elastic element can be constituted by at least one Belleville spring 20 (or by a plurality thereof, depending on the specific constructive requirements), which is fixed with its base (which defines said stroke limit) to the chassis of the farm machine 2 and can abut, at the opposite end, against a transverse plate 14c, which protrudes from both sides of the plate 14a.

It is specified, moreover, that the possibility of providing devices 1 in which the damping unit 12 is of a different type is not excluded and is in any case within the protective scope claimed herein.

In any case, once the arm 13 has been moved into this active configuration, if the operator subsequently manages to clear the working shaft 4, removing the unwanted build-up of material, any sudden restarting of the rotation of said working shaft 4 is almost instantaneously and forcibly stopped. In fact, the rotation of the disk 17 moves quickly one of its shoulders 16 into abutment against said first end portion 13a of the arm 13, thereby causing the locking of the rotation of the disk 17 and of the working shaft 4.

Normal operation can therefore be restored by stopping the drive unit in order to then proceed with the transition of the retention element 9 from the active configuration to the passive configuration.

According to the invention, the safety device 1 comprises an automatic apparatus for the timed actuation of the transition of the actuation element (for example constituted by the retention element 9) from the passive configuration to the active configuration; more precisely, said automatic apparatus comprises, first of all, at least first means for detecting the rotation rate of the working shaft 4 and second means for detecting the rotation rate of a driving shaft (arranged upstream of the working shaft 4 and of the output shaft already described), comprised within the working assembly.

The detection means described above (a possible embodiment of which that is non-limiting of the application of the invention will be described in the continuation of the present description), are controlled by an electronic control and actuation unit, constituted for example by an electronic controller (which can be part of the main one, which controls the entire farm machine 2, or a separate controller dedicated to the specific task described herein).

In turn, the electronic unit is capable of controlling and actuating a mechanism 21 for moving the retention element 9 (or other actuation element); the electronic unit is therefore provided with a module for comparing the rotation rates cited above, so as to be able to perform the timed sending, after a preset delay time monitored by a respective timer, of the command for transition of the retention element 9 from the passive configuration to the active configuration, following detection of a variation between the rates that exceeds a preset reference parameter and represents a jam of the working shaft 4.

In fact, in case of a jam (caused for example by an unwanted and excessive build-up of straw, hay and the like, between the teeth 7) that involves the working shaft 4, a deviation occurs between the rates of rotation of the working shaft, which stops, and the rate of rotation of the driving shaft, which instead remains active (because said driving shaft is arranged, as already noted, upstream of the clutch that takes care of the uncoupling between the working shaft 4 and the drive unit following the jam).

More precisely, the disengagement can be provided by a normal radial pin clutch that operates on the working shaft 4 (and is interposed between the working shaft 4 and the driving shaft), capable of disengaging it from the drive unit upon detection of a limit torque that corresponds to a jam that involves the working shaft 4.

It is possible therefore to monitor in each instant the two rotation rates, conveniently fixing a reference parameter in order to detect immediately a difference between the number of rotations (that corresponds to the undesired stopping of the working shaft 4) that occurs due to a jam.

For reasons that will become more apparent in the following paragraphs, this delay time is chosen preferably to be shorter than the time estimated for manual intervention by an operator to remove the jam.

In particular, the preset delay time is chosen preferably in an interval comprised between 5 seconds and 10 seconds and even more preferably is equal to 8 seconds.

The choice of the duration of the delay time, before the safety device 1 operates on the retention element 9, causing, as already shown, its transition into the active configuration, is made so as to leave available to the operator the seconds (indeed just a few) needed in order to wait for an optional self-restarting of the working shaft 4 (if, under the thrust of the driving shaft, which is still active, the material that has built up is not removed automatically).

This eventuality in fact occurs frequently, and it would be therefore very inconvenient for the operator to have to climb down every time from his driving seat, when, indeed, waiting a few seconds often proves to be a solution to the problem.

First of all, therefore, the delay time is kept sufficiently long to allow the automatic reactivation of the normal operation of the machine 2.

However, as anticipated in the previous paragraphs, the delay time is preferably chosen to be shorter than the time that one estimates necessary for the operator to climb down to take care of the manual removal of the built-up material, which prevents free rotation.

In this manner, the safety device 1 according to the invention allows an operator to solve in absolute safety an accidental jam of the working shaft 4: in fact, if he decides to remove manually the excess material, the delay time after which the electronic unit arranges the retention element 9 in the active configuration is still shorter than the time that the operator needs to climb down from his seat and approach the working shaft 4, which operates therefore in absolute safety, achieving thereby the intended aim, even without the operator having to carry through any particular action in this regard.

According to the preferred constructive solution, which is non-limiting for the application of the invention, the first means comprise a first sensor for detecting the rotation rate of a first phonic wheel, which can be keyed on the working shaft 4, and likewise the second means comprise a second sensor for detecting the rotation rate of a second phonic wheel, that can be keyed in turn on the driving shaft.

It is noted that the protective scope claimed herein includes the use of any known type of phonic wheel (and consequently of corresponding specific types of detecting sensors): for example, the detection means can comprise phonic wheels of the inductive type, or optical phonic wheels, capacitive phonic wheels, etcetera, and likewise the use of other components adapted to detect the rotation rate of the working shaft 4 and of the driving shaft is not excluded.

Whatever the choice of detection means adopted, the sensors are controlled by the controller (or other electronic unit), so as to send in each instant respectively the values of the rotation rate of the working shaft and of the driving shaft, in order to allow the desired comparison, and the intervention already described, in case of a jam.

Usefully, with further reference to the preferred solution, which does not, however, limit the application of the invention, the movement mechanism 21 is constituted substantially by an electromagnetic actuator 22, which is controlled by the electronic unit and is provided with a piston 23 fixed at one of its ends to the retention element 9. It is useful to note that the possibility is not excluded, and is in any case within the protective scope claimed herein, to use different types of movement mechanisms 21: for example, the movement mechanism 21 might be constituted by a hydraulic cylinder, provided with a respective electric valve, or by a different element, as a function of the specific requirements of application.

With further reference to the solution that entails the use of a piston 23, said piston can slide (inside the actuator 22) between a first limiting position, in which the retention element 9 is arranged in the already cited passive configuration, and a second limiting position, in which the retention element 9 is arranged correspondingly in the active configuration (illustrated in the accompanying figures), and vice versa, in ways that will be illustrated in more detail in the following paragraphs.

Usefully, the safety device 1 comprises an elastic element, of the type of a helical spring 24 and the like, which is coupled to the retention element 9 and capable therefore of keeping it elastically in the active configuration upon shutdown of the electronic unit.

The sequence of the movements of the retention element 9 under the operation of the piston 23 and of the helical spring 24 is therefore as follows: when the controller is off or deactivated, the helical spring 24 keeps the retention element 9 in the active configuration (and therefore the piston 23 in the second limiting position).

This prevents the farm machine 2 from operating without having first activated the controller (and therefore without having reached the safety conditions offered thereby and described above), because the retention element 9 can only move to the passive configuration when the controller is on.

When the controller is activated, in fact, it actuates the transition of the piston 23 from the second limiting position to the first limiting position, thus moving the retention element 9 to the passive configuration and allowing therefore the normal operation of the farm machine 2.

At a subsequent jam of the working shaft 4, the electronic unit actuates the new transition of the retention element 9 from the passive configuration to the active configuration simply by deactivating the operation of the piston 23, thus releasing the retention element 9 itself, which, under the action of the helical spring 24, returns to the active configuration (entraining the piston 23 into the second limiting position), so as to interfere with the complementary retention element 10 and prevent its immediate restarting once the problem has been solved.

For further safety, it is possible to provide the safety device 1 with a control microswitch, arranged on the retention element 9, which checks its correct position upon controller power-on.

As already observed, in fact, when the controller is off the retention element 9 must be in the active configuration: the purpose of the control microswitch is indeed to verify this condition, and only when it is met (which corresponds to correct operation of the safety device 1 according to the invention) does the controller ensure movement of the piston 23 to the first limiting position and therefore of the retention element 9 to the passive configuration.

Advantageously, the safety device 1 also comprises an actuation element 25, which can be activated manually by an operator, for the transition of the retention element 9 from the passive configuration to the active configuration.

In particular, the actuation element 25 is constituted preferably by an oscillating bar 26, which can be arranged in front of and parallel to the working shaft 4 and is associated with a microswitch for actuating the forced transition of the retention element 9 from the passive configuration to the active configuration.

This oscillating bar 26 (thanks to the actuation microswitch, connected to the electronic unit) can thus allow the operator to proceed directly with the movement of the retention element 9, for example in order to remove partial jams (that do not involve the entire length of the working shaft 4).

Positively, the electronic unit is provided with a function for resetting the count of the preset delay time (by the above-mentioned timer), which can be activated automatically when the electronic unit itself detects the stopping and subsequent restarting of the drive unit.

The possibility offered by the function described above allows the operator to defer the actuated transition of the retention element 9 from the passive configuration to the active configuration, in order to wait thus for a higher number of seconds for the possible automatic restarting of the rotation shaft 4.

Obviously, in order to make use of this possibility, the operator, who is sitting in his driving seat, is called upon to actuate a lever (or other actuation element usually provided in farm machines 2) designed to turn on and off the drive unit responsible for the movement of the working shaft 4 and of the other functional units, before the entire delay time passes (for example, therefore, within 5-6 seconds from the stopping of the working shaft 4).

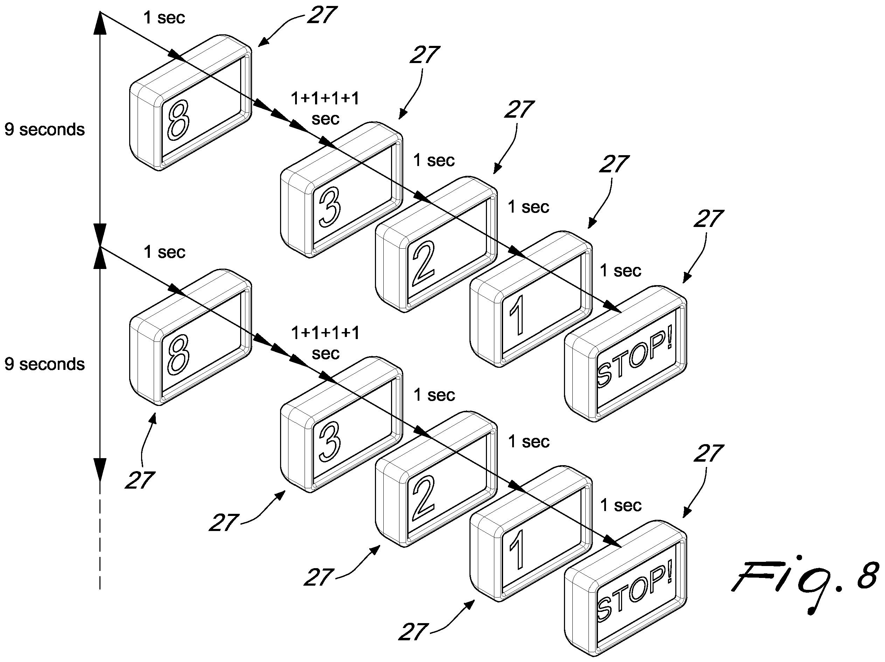

In this manner, following a jam, and after a few seconds, the operator can turn off and on again the drive unit to reset its timer and have additional seconds available in order to wait for a possible automatic restart, substantially according to the diagram shown in Figure 8, which shows the viewer 27 of the electronic unit, which reports the seconds missing before the actuated transition of the retention element 9 from the passive configuration to the active configuration.

Moreover, this function can be deactivated automatically, by the electronic unit itself, as a consequence of the detection of a time interval, between the stopping of the drive unit and the subsequent restarting, that is longer than a preset safety time.

For example, said preset safety time is chosen preferably in an interval comprised between 5 seconds and 15 seconds and even more preferably is chosen to be equal to 9 seconds (as indeed shown in the accompanying Figure 8), in any case substantially shorter than the time interval required (by the operator) to disassemble the controller and climb down from the driving seat, taking the controller with him, in order to bypass the provided safety features.

In fact, if the operator had the possibility of resetting the timer at will, without further controls, he might decide to bypass the provided safety features by stopping first the drive unit before the delay time has elapsed (thus preventing the controller from moving the retention element 9 to the active position).

Then he might disassemble the controller, in order to bring it to the ground while he manually removes the jam, using at the same time other controls, arranged typically on the rear fender of farm machines 2 of the known type, to restart the drive unit with consequent resetting of the count, avoiding indefinitely the transition of the retention element 9 from the passive configuration to the active configuration.

Indeed to prevent this improper use of the safety device 1 according to the invention, the safety time is chosen equal to a few seconds: this safety time is in fact shorter than the one needed to disassemble the controller, climb down from the driving seat and arrange oneself proximate to the working shaft 4; once this safety time has elapsed, a subsequent restarting of the drive unit would be detected as abnormal by the electronic unit, causing immediately (or at most after 8 seconds) the transition of the retention element 9 from the passive configuration to the active configuration.

The farm machine according to the invention comprises an apparatus 3 for treating materials of the type of agricultural products that is equipped with at least one rotating working shaft 4 which faces the ground and is proximate thereto and is provided with means 5 for treating the materials.

The farm machine 2 has, moreover, a safety device 1 that comprises at least one movable actuation element (for example a retention element 9 of the type described on the preceding pages) for actuating the interruption of the transmission of power from a drive unit of the working shaft 4 to the working shaft 4 itself. Said actuation element is movable from a passive configuration, for free power transmission, to an active configuration, for interrupting the transmission of power, and vice versa.

According to the invention, the safety device 1 comprises an automatic apparatus for the timed actuation of the transition of the actuation element from the passive configuration to the active configuration. This automatic apparatus comprises at least first means for detecting the rotation rate of the working shaft 4 and second means for detecting the rotation rate of a driving shaft, comprised within the working assembly. The detection means are controlled by an electronic unit for the control and management of a mechanism 21 for moving the actuation element. In this manner, the electronic unit, which is provided with a module for comparing the rotation rates, can proceed with the timed sending, after a preset delay time monitored by a respective timer, of the command for the transition of the actuation element from the passive configuration to the active configuration, following the detection of a variation between the rates that exceeds a preset reference parameter.

This variation corresponds preferably to a jam of the working shaft 4, and this delay time is preferably shorter than the time estimated for manual intervention by an operator to remove the jam.

The safety method for farm machines 2 provided with an apparatus 3 for treating materials such as farm products and equipped with at least one rotating working shaft 4, which faces the ground and is proximate thereto and is provided with means 5 for treating materials consists, in a first step a., in detecting the rotation rate of the working shaft 4 (for example according to the methods already described).

Moreover, the method entails, in a step b. (to be performed substantially simultaneously with the above-mentioned step a.), monitoring the rotation rate of a driving shaft, which is comprised in a drive unit of the working shaft 4, with which it is associated by means of a respective kinematic transmission chain 11.

The method according to the invention entails then, in a step c., comparing the rotation rates by means of an electronic control and management unit provided with a respective comparison module.

If a deviation between the rates that exceeds a preset reference parameter representative of a jam of the working shaft 4 is detected, the safety method according to the invention entails then, in a step d., sending, after a preset delay time, the command for activation of a mechanism 25 for moving at least one movable element (for example the retention element 9 already described) for actuating the interruption of the transmission of power from a drive unit of the working shaft 4 to the working shaft 4 itself.

This delay time is preferably shorter than the time estimated for manual intervention by an operator to remove the jam.

The actuation element is movable from a passive configuration, for free power transmission, to an active configuration, for interrupting the transmission of power, and vice versa.

In practice it has been found that the device, the machine and the method according to the invention fully achieve the intended aim and objects, since by resorting to the automatic apparatus for timed actuation described on the previous pages, if the operator wishes to intervene manually on the working shaft 4 of a farm machine 2 he will find himself inevitably operating in absolute safety conditions, with the actuation element arranged in a configuration that prevents power transmission from the drive unit to the working shaft, therefore making it impossible to witness a dangerous and sudden restarting of the rotation of the working shaft 4.

After the transition of the retention element 9 (or other actuation element) from the passive configuration to the active configuration, in fact, only by stopping the drive unit is it possible to proceed with the manual reactivation of the active configuration and therefore with the restarting of the normal operation.

Moreover, the choice of a delay time equal to a few seconds makes it possible to wait for any automatic restart of the rotation of the working shaft 4, avoiding therefore a useless waste of time by the operator, who might climb down from his seat just when the jam is automatically removed.

The invention thus conceived is susceptible of numerous modifications and variations, all of which are within the scope of the appended claims; all the details may furthermore be replaced with other technically equivalent elements.

In the exemplary embodiments, individual characteristics, given in relation to specific examples, may actually be interchanged with other different characteristics that exist in other exemplary embodiments.

In practice, the materials used, as well as the dimensions, may be any according to the requirements and the state of the art.

The disclosures in Italian Patent Application No. BO2012A000193 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A safety device for farm machines provided with an apparatus (3) for treating materials of the type of agricultural products, equipped with at least one rotating working shaft (4) which faces the ground and is proximate thereto and is provided with means (5) for treating the materials, said device (1) comprising at least one movable actuation element (9) for actuating the interruption of the transmission of power from a drive unit of the working shaft (4) to the working shaft (4) itself, said actuation element (9) being movable from a passive configuration, for free power transmission, to an active configuration, for interruption of the power transmission, and vice versa, **characterized in that** it comprises an automatic apparatus for the timed actuation of the transition of said actuation element (9) from said passive configuration to said active configuration, said automatic apparatus comprising at least first means for detecting the rotation rate of said working shaft (4) and second means for detecting the rotation rate of a driving shaft, comprised in said drive unit, said detection means being controlled by an electronic unit for the control and actuation of a mechanism (21) for the movement of said actuation element, said electronic unit being provided with a module for comparing the rotation rates for the timed sending, after a preset delay time monitored by a respective timer, of the command for transition of said actuation (9) element from said passive configuration to said active configuration, following the detection of a variation between the rates that exceeds a preset reference parameter, which represents a jamming of the working shaft (4), said delay time being shorter than the time estimated for manual intervention by an operator to remove the jam.

2. The device according to claim 1, **characterized in that** it comprises a complementary retention element (10), which can be functionally associated with a kinematic transmission chain (11) which is interposed between the drive unit of the working shaft (4) and the working shaft (4) itself, in order to place the working shaft (4) under the control of said complementary retention element (10), said actuation element being constituted by a retention element (9) which can move on command from a passive configuration, in which said retention element (9) is spaced from said complementary retention element (10), for the free rotation of the working shaft (4) and the free transmission of power, to an active configuration, in which said retention element (9) is arranged so as to interfere with the path of said complementary retention element (10), for the forced locking of said complementary retention element (10) and of the working shaft (4) and the consequent interruption of the transmission of power, and vice versa, at least one of said retention element (9) and said complementary retention element (10) being associated with a unit (12) for damping the forced locking, which can be actuated automatically upon the impact of said retention element (9) with said complementary retention element (10).

3. The safety device according to claim 1, **characterized in that** said preset delay time is chosen preferably in an interval comprised between 5 seconds and 10 seconds and even more preferably is chosen equal to 8 seconds.

4. The safety device according to one or more of the preceding claims, **characterized in that** said first means comprise a first sensor for detecting the rotation rate of a first phonic wheel, which can be keyed on the working shaft (4), said second means comprising a second sensor for detecting the rotation rate of a second phonic wheel, which can be keyed on the driving shaft, said sensors being controlled by said electronic unit, in order to send in each instant to said electronic unit respectively the values of the rotation rate of the working shaft (4) and of the driving shaft.

5. The safety device according to one or more of the preceding claims, **characterized in that** said movement mechanism (21) is constituted substantially by an electromagnetic actuator (22), which is controlled by said electronic unit and is provided with a piston (23) fixed by means of one of its ends to said retention element (9), said piston (23) being able to slide between a first limiting position, in which said retention element (9) is arranged in said passive configuration, and a second limiting position, in which said retention element (9) is arranged in said active configuration, and vice versa.

6. The safety device according to one or more of the preceding claims, **characterized in that** it comprises an elastic element, of the type of a helical spring (24) and the like, which is coupled to said retention element (9), in order to keep said retention element (9) in said active configuration upon shutdown of said electronic unit.

7. The safety device according to one or more of the preceding claims, **characterized in that** it comprises an actuation element (25), which can be activated manually by an operator, for the transition of said retention element (9) from said passive configuration to said active configuration, said actuation element (25) being constituted by an oscillating bar, which can be arranged in front of and parallel to the working shaft (4), said bar being associated with a microswitch for actuating the forced transition of said retention element (9) from said passive configuration to said active configuration.

8. The safety device according to one or more of the preceding claims, **characterized in that** said electronic unit is provided with a function for resetting the count of said preset delay time, which can be operated automatically following the detection, by said electronic unit, of the stopping and subsequent restarting of the drive unit, said function being able to be deactivated automatically by said electronic unit as a consequence of the detection of a time interval between stopping and subsequent restarting that is longer than a preset safety time.

9. The safety device according to claim 8, **characterized in that** said preset safety time is chosen preferably in an interval comprised between 5 seconds and 15 seconds and even more preferably is chosen equal to 9 seconds and is shorter than the time estimated for disassembly of the electronic unit by an operator.

10. A farm machine, comprising an apparatus (3) for treating materials such as agricultural products equipped with at least one rotating working shaft (4) which faces the ground and is proximate thereto and is provided with means (5) for treating the materials and with a safety device that comprises at least one movable actuation element (9) for actuating the interruption of the transmission of power from a drive unit of said working shaft (4) to the working shaft (4), said actuation element (9) being movable from a passive configuration, for free power transmission, to an active configuration, for interrupting the transmission of power, and vice versa, **characterized in that** said farm machine comprises a safety device according to claim 1.

11. A safety method for farm machines provided with an apparatus (3) for treating materials such as farm products, equipped with at least one rotating working shaft (4), which faces the ground and is proximate thereto and is provided with means (5) for treating materials, which consists in:
a. detecting the rotation rate of the working shaft (4);
b. monitoring the rotation rate of a driving shaft, comprised in a drive unit, through a respective kinematic transmission chain (11), of the working shaft (4), substantially simultaneously with said detection step a;
c. comparing the rotation rates by means of an electronic control and actuation unit provided with a respective comparison module;
d. sending, after a preset delay time following the detection of a deviation between the rates that exceeds a preset reference parameter, which is representative of a jamming of the working shaft (4), the command for activation of a mechanism (21) for moving at least one movable actuation element (9) for actuating the interruption of the transmission of power from a drive unit of the working shaft (4) to said actuation shaft (4), the actuation element (9) being movable from a passive configuration, for free power transmission, to an active configuration, for interrupting the transmission of power, and vice versa, said delay time being shorter than the time estimated for manual intervention by an operator to remove the jam.

## Patentansprüche

1. Eine Sicherheitsvorrichtung für Landmaschinen, ausgestattet mit einem Gerät (3) für die Behandlung von Materialien von der Art landwirtschaftlicher Produkte, ausgestattet mit mindestens einer sich drehenden Arbeitswelle (4), die dem Boden zugewandt und ihm nahe und mit Mitteln (5) zum Behandeln der Materialien ausgestattet ist, wobei die Vorrichtung (1) mindestens ein bewegliches Betätigungselement (9) zum Betätigen der Unterbrechung der Übertragung von Kraft von einer Antriebseinheit der Arbeitswelle (4) auf die Arbeitswelle (4) selbst umfasst, wobei das Betätigungselement (9) beweglich ist aus einer passiven Anordnung für freie Kraftübertragung in eine aktive Anordnung für die Unterbrechung der Kraftübertragung und umgekehrt, **dadurch gekennzeichnet, dass** sie eine automatische Vorrichtung für die getaktete Aktivierung des Übergangs des Betätigungselements (9) aus der passiven Anordnung in die aktive Anordnung umfasst, wobei das automatische Gerät mindestens erste Mittel zur Erfassung der Rotationsrate der Arbeitswelle (4) und zweite Mittel zur Erfassung der Rotationsrate einer Antriebswelle umfasst, die in der Antriebseinheit umfasst ist, wobei die Erfassungsmittel von einer elektronischen Einheit für die Steuerung und den Antrieb eines Mechanismus (21) für die Bewegung des Betätigungselements gesteuert werden, die elektronische Einheit mit einem Modul zum Vergleichen der Rotationsraten ausgestattet ist für das getaktete Senden, nach einer voreingestellten Verzögerungszeit, die von einem entsprechenden Timer überwacht wird, des Befehls zum Übergang des Betätigungselements (9) aus der passiven Anordnung in die aktive Anordnung infolge der Erfassung einer Abweichung zwischen den Raten, die einen voreingestellten Bezugsparameter überschreitet, was ein Klemmen der Arbeitswelle (4) signalisiert, wobei die Verzögerungszeit kürzer ist als die Zeit, die für den manuellen Eingriff durch einen Bediener, um die Blockierung zu entfernen, veranschlagt wird.

2. Die Vorrichtung gemäß Anspruch 1, **dadurch gekennzeichnet, dass** sie ein komplementäres Halteelement (10) umfasst, das funktionell mit einer kinematischen Kraftübertragungskette (11) verbunden sein kann, welche zwischen der Antriebseinheit der Arbeitswelle (4) und der Arbeitswelle (4) selbst angeordnet ist, um die Arbeitswelle (4) unter die Kontrolle des komplementären Halteelements (10) zu bringen, wobei das Betätigungselement aus einem Halteelement (9) besteht, das sich auf Befehl aus einer passiven Anordnung, in welcher das Halteelement (9) von dem komplementären Halteelement (10) beabstandet ist, zur freien Drehung der Arbeitswelle (4) und der freien Kraftübertragung, in eine aktive Anordnung bewegen kann, in welcher das Halteelement (9) angeordnet ist, um in den Pfad des komplementären Halteelements (10) einzugreifen, zum Zwecke der erzwungenen Blockierung des komplementären Halteelements (10) und der Arbeitswelle (4) und der daraus folgenden Unterbrechung der Kraftübertragung, und umgekehrt; wobei das Halteelement (9) und/oder das komplementäre Halteelement (10) mit einer Einheit (12) zum Dämpfen der erzwungenen Blockierung verknüpft sind, die beim Zusammenstoßen des Halteelements (9) mit dem komplementären Halteelement (10) automatisch aktiviert werden kann.

3. Die Sicherheitsvorrichtung gemäß Anspruch 1, **dadurch gekennzeichnet, dass** die voreingestellte Verzögerungszeit vorzugsweise so gewählt ist, dass sie innerhalb eines Intervalls liegt, das zwischen 5 Sekunden und 10 Sekunden beträgt, und noch stärker bevorzugt so gewählt ist, dass es gleich 8 Sekunden ist.

4. Die Sicherheitsvorrichtung gemäß einem oder mehreren der obigen Ansprüche, **dadurch gekennzeichnet, dass** die ersten Mittel einen ersten Sensor zur Erfassung der Rotationsrate eines ersten phonischen Rades umfassen, das auf der Arbeitswelle (4) verkeilt sein kann, wobei die zweiten Mittel einen zweiten Sensor zur Erfassung der Rotationsrate eines zweiten phonischen Rades umfassen, das auf der Antriebswelle verkeilt sein kann, wobei die Sensoren von der elektronischen Einheit gesteuert werden, um zu jedem Zeitpunkt die Werte der Rotationsrate der Arbeitswelle (4) beziehungsweise der Antriebswelle an die elektronische Einheit zu senden.

5. Die Sicherheitsvorrichtung gemäß einem oder mehreren der obigen Ansprüche, **dadurch gekennzeichnet, dass** der Bewegungsmechanismus (21) im Wesentlichen aus einem elektromagnetischen Antriebselement (22) besteht, das von der elektronischen Einheit gesteuert wird und mit einem Kolben (23) ausgestattet ist, der mit einem seiner Enden an dem Halteelement (9) befestigt ist, wobei der Kolben (23) in der Lage ist, zwischen einer ersten Grenzposition, in welcher das Halteelement (9) sich in der passiven Anordnung befindet, und einer zweiten Grenzposition zu gleiten, in der das Halteelement (9) sich in der aktiven Anordnung befindet, und umgekehrt.

6. Die Sicherheitsvorrichtung gemäß einem oder mehreren der obigen Ansprüche, **dadurch gekennzeichnet, dass** sie ein elastisches Element von der Art einer Schraubenfeder (24) und dergleichen umfasst, die mit dem Halteelement (9) gekoppelt ist, um das Halteelement (9) bei Abschalten der elektronischen Einheit in der aktiven Anordnung zu halten.

7. Die Sicherheitsvorrichtung gemäß einem oder mehreren der obigen Ansprüche, **dadurch gekennzeichnet, dass** sie ein Betätigungselement (25) umfasst, das manuell von einem Bediener aktiviert werden kann für den Übergang des Halteelements (9) aus der passiven Anordnung in die aktive Anordnung, wobei das Betätigungselement (25) aus einer Schwingungsstange besteht, die vor der Arbeitswelle (4) und parallel dazu angeordnet sein kann, wobei die Stange mit einem Mikroschalter für die Aktivierung des erzwungenen Übergangs des Halteelements (9) aus der passiven Anordnung in die aktive Anordnung verknüpft ist.

8. Die Sicherheitsvorrichtung gemäß einem oder mehreren der obigen Ansprüche, **dadurch gekennzeichnet, dass** die elektronische Einheit mit einer Funktion zum Zurücksetzen der Zählung der voreingestellten Verzögerungszeit versehen ist, die automatisch betätigt werden kann nach der Erfassung des Anhaltens und anschließenden Neustarts der Antriebseinheit durch die elektronische Einheit, wobei die Funktion automatisch von der elektronischen Einheit deaktiviert werden kann infolge der Erfassung eines Zeitintervalls zwischen Anhalten und anschließendem Neustart, das länger ist als eine voreingestellte Sicherheitszeit.

9. Die Sicherheitsvorrichtung gemäß Anspruch 8, **dadurch gekennzeichnet, dass** die voreingestellte Sicherheitszeit vorzugsweise so gewählt wird, dass sie innerhalb eines Intervalls liegt, das zwischen 5 Sekunden und 15 Sekunden beträgt, und noch stärker bevorzugt so gewählt wird, dass sie gleich 9 Sekunden ist und kürzer ist als die Zeit, die für die Demontage der elektronischen Einheit durch einen Bediener veranschlagt wird.

10. Eine Landmaschine, die ein Gerät (3) zum Behandeln von Materialien, wie zum Beispiel landwirtschaftlichen Produkten, umfasst, ausgestattet mit mindestens einer sich drehenden Arbeitswelle (4), die dem Boden zugewandt und ihm nahe und mit Mitteln (5) zum Behandeln der Materialien ausgestattet ist, und mit einer Sicherheitsvorrichtung, die mindestens ein bewegliches Betätigungselement (9) zum Betätigen der Unterbrechung der Übertragung von Kraft von einer Antriebseinheit der Arbeitswelle (4) auf die Arbeitswelle (4) umfasst, wobei das Betätigungselement (9) beweglich ist aus einer passiven Anordnung für freie Kraftübertragung in eine aktive Anordnung für die Unterbrechung der Kraftübertragung und umgekehrt, **dadurch gekennzeichnet, dass** die Landmaschine eine Sicherheitsvorrichtung gemäß Anspruch 1 umfasst.

11. Ein Sicherheitsverfahren für Landmaschinen, die ausgestattet sind mit einem Gerät (3) zum Behandeln von Materialien, wie zum Beispiel landwirtschaftlichen Produkten, ausgestattet mit mindestens einer sich drehenden Arbeitswelle (4), die dem Boden zugewandt und ihm nahe und mit Mitteln (5) zum Behandeln von Materialien ausgestattet ist; welches aus Folgendem besteht:
a. Erfassen der Rotationsrate der Arbeitswelle (4);
b. Überwachen der Rotationsrate einer in einer Antriebseinheit umfassten Antriebswelle, durch eine entsprechende kinematische Kraftübertragungskette (11), der Arbeitswelle (4), im Wesentlichen gleichzeitig mit dem Erfassungsschritt a;
c. Vergleichen der Rotationsraten mit Hilfe einer elektronischen Steuerungs- und Betätigungseinheit, die mit einem entsprechenden Vergleichsmodul ausgestattet ist;
d. Senden, nach einer voreingestellten Verzögerungszeit nach der Erfassung einer Abweichung zwischen den Raten, die einen voreingestellten Bezugsparameter überschreitet, die ein Klemmen der Arbeitswelle (4) signalisiert, des Befehls zur Aktivierung eines Mechanismus (21) zum Bewegen mindestens eines beweglichen Betätigungselements (9) zum Betätigen der Unterbrechung der Kraftübertragung von einer Antriebseinheit der Arbeitswelle (4) auf die Arbeitswelle (4), wobei das Antriebselement (9) beweglich ist aus einer passiven Anordnung für freie Kraftübertragung in eine aktive Anordnung zum Unterbrechen der Kraftübertragung und umgekehrt, wobei die Verzögerungszeit kürzer ist als die Zeit, die für den manuellen Eingriff durch einen Bediener, um die Blockierung zu entfernen, veranschlagt wird.

## Revendications

1. Dispositif de sécurité pour des machines agricoles munies d'un appareil (3) pour le traitement de matériaux de type produits agricoles, équipé d'au moins un arbre de travail rotatif (4) qui fait face au sol et est à proximité de celui-ci et est muni de moyens (5) pour le traitement des matériaux, ledit dispositif (1) comprenant au moins un élément d'actionnement mobile (9) pour l'actionnement de l'interruption de la transmission de puissance provenant d'une unité d'entraînement de l'arbre de travail (4) lui-même, ledit élément d'actionnement (9) étant mobile entre une configuration passive, pour une transmission de puissance libre, et une configuration active, pour l'interruption de la transmission de puissance, et vice-versa, **caractérisé en ce qu'**il comprend un appareil automatique pour l'actionnement temporisé de la transition dudit élément d'actionnement (9) de ladite configuration passive vers ladite configuration active, ledit appareil automatique comprenant au moins des premiers moyens pour la détection de la vitesse de rotation dudit arbre de travail (4) et des deuxièmes moyens pour la détection de la vitesse de rotation d'un arbre d'entraînement, compris dans ladite unité d'entraînement, lesdits moyens de détection étant contrôlés par une unité électronique pour la commande et l'actionnement d'un mécanisme (21) pour le mouvement dudit élément d'actionnement, ladite unité électronique étant munie d'un module pour la comparaison des vitesses de rotation pour l'envoi temporisé, après un temps de retard prédéfini, surveillé par un temporisateur correspondant, de la commande pour la transition dudit élément d'actionnement (9) entre ladite configuration passive et ladite configuration active, lors de la détection d'une variation entre les vitesses qui dépasse un paramètre de référence prédéfini, qui représente un grippage de l'arbre de travail (4), ledit temps de retard étant plus court que le temps estimé pour une intervention manuelle par un opérateur pour éliminer le grippage.

2. Dispositif selon la revendication 1, **caractérisé en ce qu'**il comprend un élément de rétention complémentaire (10) qui peut être associé de manière fonctionnelle à une chaîne de transmission cinématique (11) qui est intercalée entre l'unité d'entraînement de l'arbre de travail (4) et l'arbre de travail (4) lui-même, afin de placer l'arbre de travail (4) sous le contrôle dudit élément de rétention complémentaire (10), ledit élément d'actionnement étant constitué d'un élément de rétention (9) qui peut se déplacer sur commande d'une configuration passive, dans laquelle ledit élément de rétention (9) est espacé dudit élément de rétention complémentaire (10), pour la rotation libre de l'arbre de travail (4) et la transmission de puissance libre, vers une configuration active, dans laquelle ledit élément de rétention (9) est disposé de façon à interférer avec le trajet dudit élément de rétention complémentaire (10), pour le verrouillage forcé dudit élément de rétention complémentaire (10) et de l'arbre de travail (4) et donc l'interruption de la transmission de puissance et vice-versa, au moins un dudit élément de rétention (9) et dudit élément de rétention complémentaire (10) étant associé à une unité (12) pour l'amortissement du verrouillage forcé, qui peut être actionnée automatiquement lors de l'impact de ledit élément de rétention (9) contre ledit élément de rétention complémentaire (10).

3. Dispositif de sécurité selon la revendication 1, **caractérisé en ce que** ledit temps de retard prédéterminé est choisi de préférence dans un intervalle compris entre 5 secondes et 10 secondes et, de préférence, est choisi égale à 8 secondes.

4. Dispositif de sécurité selon l'une ou plusieurs des revendications précédentes, **caractérisé en ce que** lesdits premiers moyens comprennent un premier capteur pour la détection de la vitesse de rotation d'une première roue phonique, qui peut être fixée sur l'arbre de travail (4), lesdits deuxièmes moyens comprenant un deuxième capteur pour la détection de la vitesse de rotation d'une deuxième roue phonique, qui peut être fixée sur l'arbre d'entraînement, lesdits capteurs étant contrôlés par ladite unité électronique, afin d'envoyer à chaque instant, à ladite unité électronique, respectivement les valeurs de la vitesse de rotation de l'arbre de travail (4) et de l'arbre d'entraînement.

5. Dispositif de sécurité selon l'une ou plusieurs des revendications précédentes, **caractérisé en ce que** ledit mécanisme de mouvement (21) est constitué substantiellement d'un actionneur électromagnétique (22) qui est contrôlé par ladite unité électronique et est muni d'un piston (23) fixé au moyen d'une de ses extrémités audit élément de rétention (9), ledit piston (23) pouvant coulisser entre une première position de limitation, dans laquelle ledit élément de rétention (9) est disposé dans ladite configuration passive, et une deuxième position de limitation, dans laquelle ledit élément de rétention (9) est disposé dans ladite configuration active et vice-versa.

6. Dispositif de sécurité selon l'une ou plusieurs des revendications précédentes, **caractérisé en ce qu'**il comprend un élément élastique, du type d'un ressort hélicoïdal (24) ou similaire, qui est couplé audit élément de rétention (9), afin de maintenir ledit élément de rétention (9) dans ladite configuration active lors de l'arrêt de ladite unité électronique.

7. Dispositif de sécurité selon l'une ou plusieurs des revendications précédentes, **caractérisé en ce qu'**il comprend un élément d'actionnement (25), qui peut être activé manuellement par un opérateur, pour la transition dudit élément de rétention (9) de ladite configuration passive vers ladite configuration active, ledit élément d'actionnement (25) étant constitué d'une barre oscillante, qui peut être disposée devant et parallèlement à l'arbre de travail (4), ladite barre étant associée à un micro-interrupteur pour l'actionnement de la transition forcée dudit élément de rétention (9) de la configuration passive vers ladite configuration active.

8. Dispositif de sécurité selon l'une ou plusieurs des revendications précédentes, **caractérisé en ce que** ladite unité électronique est munie d'une fonction pour la réinitialisation du comptage dudit temps de retard prédéterminé, qui peut être effectuée automatiquement lors de la détection, par ladite unité électronique, de l'arrêt et du redémarrage successifs de l'unité d'entraînement, ladite fonction pouvant être désactivée automatiquement par ladite unité électronique suite à la détection d'un intervalle de temps entre l'arrêt et le redémarrage qui est plus long qu'un temps de sécurité prédéterminé.

9. Dispositif de sécurité selon la revendication 8, **caractérisé en ce que** ledit temps de sécurité prédéterminé est choisi de préférence dans un intervalle compris entre 5 secondes et 15 secondes et de préférence est choisi égal à 9 secondes et est plus court que le temps estimé pour le désassemblage de l'unité électronique par un opérateur.

10. Machine agricole comprenant un appareil (3) pour le traitement de matériaux tels que des produits agricoles, équipée d'au moins un arbre de travail rotatif (4) qui fait face au sol et est à proximité de celui-ci et est muni de moyens (5) pour le traitement des matériaux et d'un dispositif de sécurité qui comprend au moins un élément d'actionnement mobile (9) pour l'actionnement de l'interruption de la transmission de puissance provenant d'une unité d'entraînement dudit arbre de travail (4) vers l'arbre de travail (4), ledit élément d'actionnement (9) étant mobile entre une configuration passive, pour une transmission de puissance libre, et une configuration active, pour l'interruption de la transmission de puissance et vice-versa, **caractérisée en ce que** ladite machine agricole comprend un dispositif de sécurité selon la revendication 1.

11. Procédé de sécurité pour des machines agricoles munies d'un appareil (3) pour le traitement de matériaux tels que des produits agricoles, équipé d'au moins un arbre de travail (4) qui fait face au sol et est à proximité de celui-ci et est muni de moyens (5) pour le traitement des matériaux, qui consiste à :
a. détecter la vitesse de rotation de l'arbre de travail (4) ;
b. surveiller la vitesse de rotation d'un arbre d'entraînement, compris dans une unité d'entraînement, par l'intermédiaire d'une chaîne de transmission cinématique (11) correspondante, de l'arbre de travail (4), de manière substantiellement simultanée avec ladite étape de détection a ;
c. comparer les vitesses de rotation au moyen d'une unité de commande et d'actionnement électronique munie d'un module de comparaison correspondant ;
d. envoi, après un temps de retard prédéterminé, lors de la détection d'un écart entre les vitesses qui dépasse un paramètre de référence prédéterminé, qui est représentatif d'un grippage de l'arbre de travail (4), de la commande d'activation d'un mécanisme (21) pour le déplacement d'au moins un élément d'actionnement mobile (9) pour l'actionnement de l'interruption de la transmission de puissance provenant d'une unité d'entraînement de l'arbre de travail (4) vers ledit arbre d'actionnement (4), l'élément d'actionnement (9) étant mobile entre une configuration passive, pour une transmission de puissance libre, et une configuration active, pour l'interruption de la transmission de puissance et vice-versa, ledit temps de retard étant plus court que le temps estimé pour une intervention manuelle par un opérateur pour éliminer le grippage.
